# FASCICULE DE BREVET EUROPEEN

(11) **EP 0 451 107 B1**
(45) Date de publication et mention de la délivrance du brevet: **30.11.1994**
(21) Numéro de dépôt: 91810229.4
(22) Date de dépôt: 28.03.1991
(51) Int. Cl.: B29C 47/08

(54) **Ligne d'extrusion pour la production continue d'un élément métallique allongé pourvu d'une gaine en matière plastique**
Extrusionssystem zur kontinuierlichen Herstellung eines länglichen kunststoffbeschichteten Elementes aus Metall
Extrusion line for the continuous production of a plastic coated metal element

(30) Priorité: 03.04.1990 CH 1116/90; 03.04.1990 CH 1117/90
(43) Date de publication de la demande: 09.10.1991
(73) Titulaire: NOKIA-MAILLEFER HOLDING S.A., 1024 Ecublens-Lausanne (CH)
(72) Inventeur: Magnollay, Gilbert, CH-1033 Cheseaux (CH); Seigneur, Rémy, CH-1603 Grandvaux (CH); Budry, Jacques, CH-1054 Morrens (CH); Clément, Jean-Claude, CH-1024 Ecublens (CH); Jaccottet, Michel, CH-1024 Ecublens (CH); Jaggi, Pierre-Yves, CH-1004 Lausanne (CH); Jaun, Hans, CH-1093 La Conversion (CH); de Boer, Philip, CH-1195 Bursinel (CH)
(74) Mandataire: Fischer, Franz Josef

(56) Documents cités:
- CH-A- 587 117
- DE-A- 3 629 096
- FR-A- 2 394 387
- FR-A- 2 601 619
- GB-A- 2 083 401
- US-A- 1 947 202
- US-A- 3 299 474

## Description

Un des problèmes que l'on rencontre dans le développement de lignes d'extrusion aussi performantes que possible réside dans le changement rapide de l'outillage d'extrusion. En effet, il arrive qu'il soit nécessaire de produire successivement des segments de fil gainé ou de câble électrique en utilisant une même ou plusieurs extrudeuses, mais en modifiant, d'un segment à l'autre, par exemple le diamètre extérieur et intérieur de l'isolation, par un agencement approprié de l'outillage d'extrusion.

Jusqu'à maintenant, les opérations nécessaires pour effectuer ces modifications comportaient généralement l'arrêt de la ligne, le démontage de l'outillage d'extrusion se trouvant en position de travail sur la ligne, le montage d'un nouvel outillage avec, le cas échéant, nettoyage de certaines parties de la tête, le réglage et l'ajustage de l'outillage, le préchauffage de la nouvelle tête et sa mise en place. On se rend compte que cette suite d'opérations nécessitait un arrêt d'assez longue durée qui pouvait, le cas échéant, perturber le fonctionnement de l'extrudeuse ou de la pluralité d'extrudeuses qui sont en service. De toute façon, les échanges représentent des temps morts importants.

On a déjà proposé, pour remédier à ces inconvénients, d'équiper une ligne d'extrusion d'un appareil d'échange, susceptible de recevoir deux têtes d'extrusion, dont l'une est en position de travail et l'autre en position de préparation.

La demande FR-A-2 601 619 décrit un dispositif comprenant un chariot indépendant de l'extrudeuse, sur lequel sont montées deux têtes d'extrusion. Les inconvénients de ce dispositif proviennent principalement de la difficulté à aligner correctement et rapidement chaque tête d'extrusion pour la mettre en position de travail ainsi que de l'encombrement du chariot en face de l'extrudeuse.

La demande DE-A-3 629 096 montre un système où seulement la partie filière de la tête d'extrusion est échangeable. Ce mouvement d'échange se faisant transversalement au flux de matière extrudée, le dispositif nécessite des joints perfectionnés capables de résister à la pression de la matière extrudée sous haute température.

Le but de la présente invention est de créer un appareil d'échange plus performant et plus précis que les appareils connus, susceptibles d'être introduit dans une ligne qui, le cas échéant, comporte plusieurs alimentations différentes.

Dans ce but, la présente invention a pour objet une ligne d'extrusion pour la production continue d'un élément métallique allongé pourvu d'une gaine en matière plastique, comportant un appareil d'échange susceptible d'être équipé de deux têtes d'extrusion et de les déplacer alternativement entre une position de travail et une position de préparation, la tête d'extrusion qui se trouve en position de travail étant raccordée à un orifice de passage de matière plastique, caractérisée en ce que l'appareil d'échange comporte, sur un socle fixe par rapport audit orifice, des moyens indépendants supportant et déplaçant chacune desdites têtes, **selon un mouvement de translation circulaire,** et des moyens mécanisés de fixation étanches de la tête qui se trouve en position de travail par rapport à l'orifice.

Le cas échéant, l'appareil d'échange selon l'invention peut effectuer le retrait d'une tête d'extrusion et la mise en place d'un nouvelle tête d'extrusion prête à l'emploi par des moyens entièrement automatiques.

On va expliquer ci-après, sur la base d'un exemple, comment l'invention peut être mise en oeuvre. On se référera pour cela au dessin annexé dont
la fig. 1 est une vue en plan de dessus schématique d'une partie d'une ligne d'extrusion pour la production continue d'un fil électrique isolé,
la fig. 2 est une vue en élévation partielle et partiellement coupée, d'un appareil d'échange faisant partie de la ligne de la fig. 1,
la fig. 3 est une vue en coupe par des plans perpendiculaires à l'axe de la ligne, de l'appareil d'échange de la fig. 2, et
la fig. 4 est une vue en élévation d'une pince automatique.

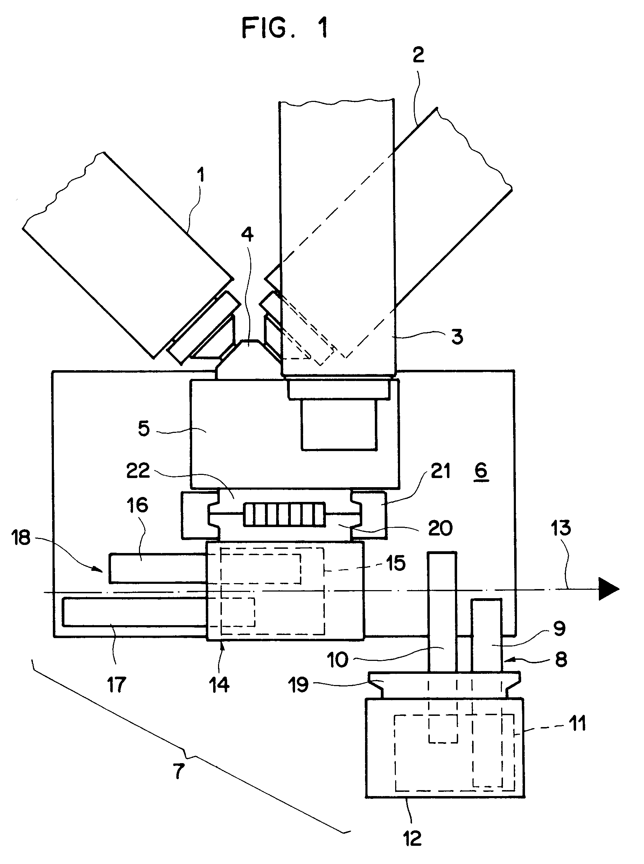

On voit à la fig. 1 certaines parties d'une ligne d'extrusion qui ne jouent pas de rôle en ce qui concerne la présente invention, mais qui sont représentées ici à simple titre d'exemple. La ligne d'extrusion comporte trois extrudeuses dont deux extrudeuses principales 1 et 2 et une extrudeuse auxiliaire 3. Toutes ces extrudeuses sont des extrudeuses à vis disposées avec leur axe en position horizontale. Les extrudeuses 1 et 2 sont disposées symétriquement de part et d'autre d'une perpendiculaire à la direction de l'axe de la ligne, désigné par 13. Elles sont orientées, dans l'exemple décrit, à 45° par rapport à l'axe 13. Elles alimentent une entrée 4 faisant partie d'un bloc de raccordement 5 fixé sur une embase 6. L'extrudeuse auxiliaire est disposée au-dessus des extrudeuses 1 et 2. Son axe est orienté perpendiculairement à l'axe 13 et son orifice de sortie communique par un conduit (non représenté) avec le bloc de raccordement 5, de façon que la matière plastique issue de cette extrudeuse auxiliaire se déplace verticalement de haut en bas pour pénétrer dans le bloc 5.

La ligne comporte également, monté sur l'embase 6, un appareil d'échange désigné de façon générale par 7, et dont l'embase 6 constitue le socle. Cet appareil d'échange comporte un premier ensemble mobile 8 formé de deux bras 9 et 10 disposés horizontalement, parallèles l'un à l'autre et pivotant tous deux, indépendamment l'un de l'autre, sur l'embase 6 autour d'axes verticaux. Les extrémités extérieures des deux bras 9 et 10 sont articulées à un support 11 sur lequel est fixée une tête d'extrusion 12. L'ensemble 8 forme, avec l'embase 6, un parallélogramme qui peut tourner autour des articulations des bras 9 et 10 sur l'embase 6 en imprimant, au support 11 et à la tête d'extrusion 12, un déplacement en translation circulaire. Les articulations des bras 9 et 10 sur l'embase 6 sont situées de part et d'autre de l'axe 13 de la ligne.

Un second ensemble mobile 18 comporte une tête d'extrusion 14 montée sur un support 15, sur lequel sont articulés deux bras horizontaux 16 et 17 pivotants, de manière symétrique aux bras 9 et 10 sur l'embase 6. L'ensemble mobile 18 est capable d'imprimer à la tête d'extrusion 14 un déplacement en translation circulaire symétrique de celui qu'effectue la tête 12.

Chacune des têtes d'extrusion 12 et 14 est équipée d'une pièce de raccordement 19, 20. L'embase 6 porte d'autre part un dispositif de verrouillage, qui est une pince, à double mâchoire 21, tandis que le bloc de raccordement 5 est équipé, comme les têtes d'extrusion 12 et 14, d'une pièce de raccordement 22 apte à coopérer avec la pince automatique 21 et l'une ou l'autre des pièces de raccordement 19, 20, de manière à raccorder le ou les canaux d'entrée de la tête 12, 14 qui se trouve en position de travail, avec les conduits internes du bloc de raccordement, ces conduits internes débouchant sous un orifice de passage. La disposition de ces éléments de raccordement fait l'objet d'une demande de brevet séparée, qui est déposée le même jour que la présente demande de brevet, de sorte qu'elle ne nécessite pas une description détaillée ici.

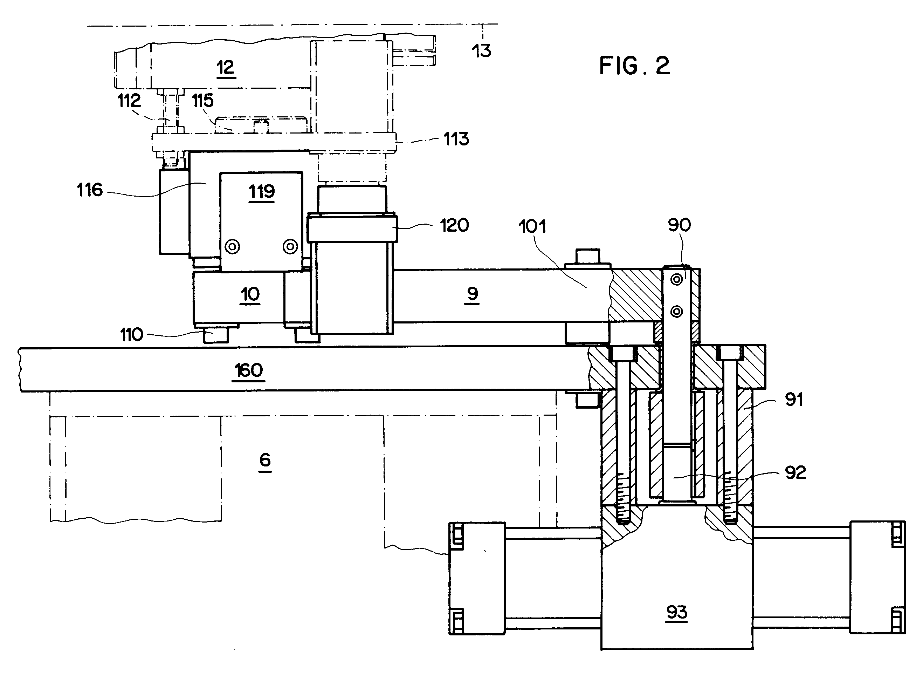

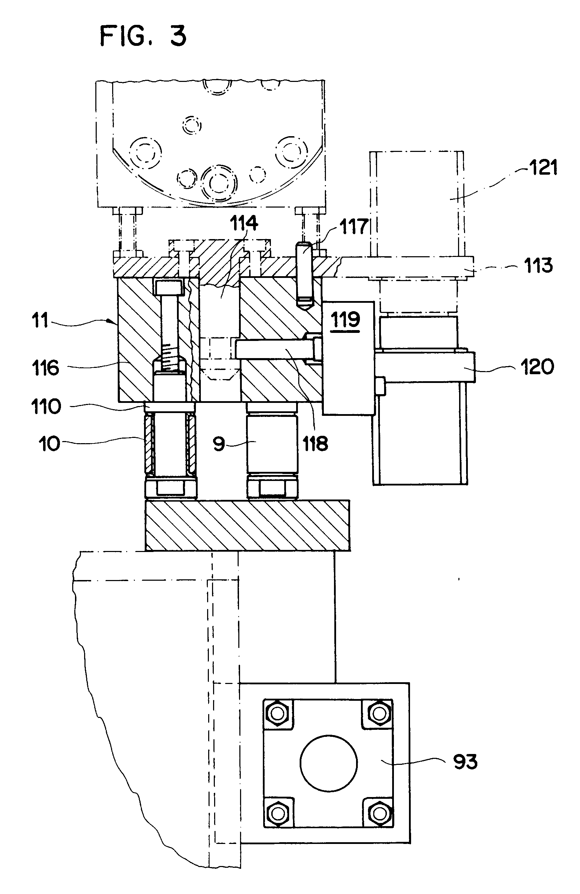

En ce qui concerne en revanche les ensembles mobiles, les fig. 2 et 3 révèlent leur construction de manière plus détaillée dans une forme d'exécution particulière. A ces figures, on voit la tête 12 qui est alors en position de travail, l'axe de la ligne étant représenté par la ligne 13. La tête d'extrusion 12 est supportée par quatre boulons 112 fixés sur une platine 113, de forme rectangulaire. Une tige de positionnement 114 (fig. 3), munie d'une tête plate 115, est engagée dans un trou de la plaque 113 et pénètre de même dans un alésage ajusté d'un support 116. Une goupille 117 et la tige de positionnement 114 permettent de positionner avec précision la tête 12 par rapport au support 116, le blocage étant réalisé par une tige 118, solidaire d'un piston de vérin 119 et s'engageant dans une gorge de la tige de positionnement 114. Les deux bras 10 et 9 sont visibles aux fig. 2 et 3. A la fig. 3, on voit, plus en détail, l'articulation entre l'extrémité du bras 10 et un axe 110 fixé au support 116.

On voit encore à la fig. 2 que l'extrémité des bras 9 et 10, liée à l'embase 6, ou plus exactement à la plaque de base 160 fixée sur cette embase, est solidaire, en ce qui concerne le bras 9, d'une tige verticale 90 solidarisée par deux goupilles avec le bras 9. Cette tige traverse une ouverture de la plaque de base 160 et est accouplée, au moyen d'un manchon 91, à l'arbre de sortie 92 d'un pignon qui est logé à l'intérieur d'un vérin à crémaillère 93. C'est ce vérin qui constitue l'organe moteur de l'ensemble mobile 8. On se rend compte que le bras 10, articulé sur la plaque 160 autour d'un axe 101, tourne librement autour de son articulation lorsque le bras 9 est commandé par le vérin 93.

Il convient de noter encore la cosse de raccordement électrique 120 qui est fixée au bloc 116 et dont les fiches sont automatiquement connectées à la cosse de raccordement 121, homologue à la cosse 120, mais montée sur la platine 113 de la tête 12. Ces raccordements permettent notamment le préchauffage de la tête et de son outillage 12 ainsi que la mesure de sa température.

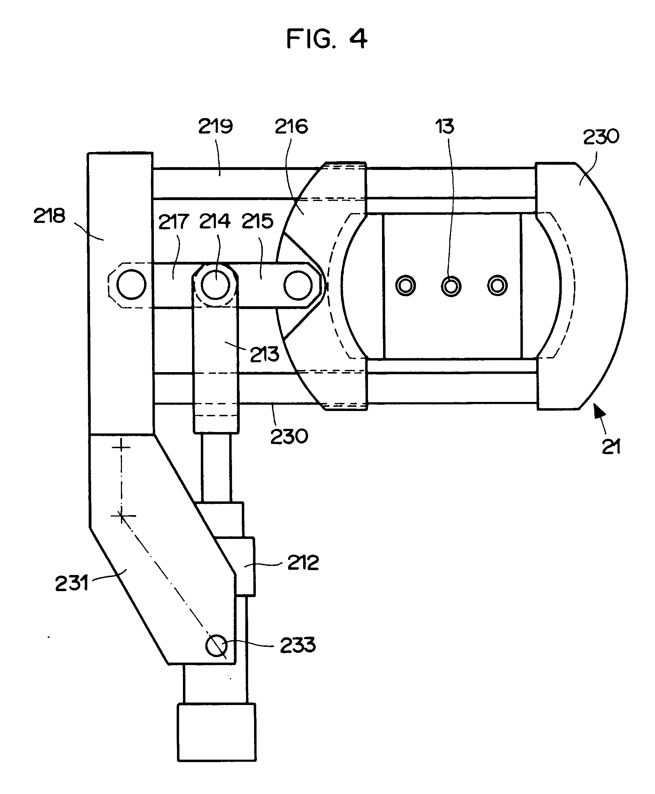

La pince de verrouillage 21 permet de réaliser automatiquement la liaison. Cette pince de verrouillage comporte tout d'abord un vérin 212, dont le cylindre est fixe par rapport au bloc de raccordement 5. La tige du vérin se déplace verticalement à la fig. 4 et porte à son extrémité supérieure un étrier 213 dont les extrémités supérieures des deux branches supportent un tourillon 214. Ce dernier traverse deux biellettes 215 qui relient l'étrier 213 à une première griffe 216 et, d'autre part, une biellette 217 qui relie le tourillon 214 à un élément de cadre 218. Cet élément de cadre 218 est solidaire de deux tiges 219 et 230 qui coulissent dans des alésages de la griffe 216 et dont les extrémités portent la griffe 230.

Le cadre 218 est lui-même relié, par un support 231, à une articulation 233 sur le cylindre de vérin 212.

On se rend compte que si, à partir de la position représentée à la fig. 4, la tige du vérin est déplacée de façon à se rétracter dans le cylindre, les deux griffes 216 et 230 sont écartées l'une de l'autre, par l'action de la genouillère 213, 217, 215. Les griffes 216 et 230 présentent des gorges internes en arc de cercle, avec des flancs obliques qui correspondent aux biseaux des pièces de raccordement 20 et 22, de sorte que, lorsqu'elles sont en position rapprochée (fig. 4), les griffes 230 et 216 exercent sur les pièces 20 et 22 des forces qui les plaquent l'une de l'autre et qui, par conséquent, établissent la connexion entre les orifices de passage correspondants des éléments 20 et 22.

Grâce à l'appareil d'échange décrit ci-dessus, le changement de la structure d'un enrobage sur un fil électrique ou sur un câble peut être effectué d'une façon très rapide et rationnelle. En effet, pendant que l'une des têtes, par exemple la tête 14, est en position de travail et que la ligne produit le conducteur désiré, selon l'axe 13, la tête 12 est en position de préparation. Dans cette position, l'outillage peut être mis en place, réglé et ajusté et le préchauffage peut être effectué en raccordant la cosse 121 à une alimentation auxiliaire. Lorsque le moment de faire l'échange des têtes est arrivé, la production est interrompue pour quelques instants et le conducteur est sectionné à l'aval de la tête 14. Le fil est alors retiré de la tête 14, la pince 21 est ouverte et la tête 14 est déplacée en position de préparation par manoeuvre du vérin homologue au vérin 93. Le fil peut alors être introduit dans la tête 12 et cette tête amenée en position de travail, après quoi la pince 21 peut être refermée et la ligne remise en fonction.

Un agencement de ce genre peut être prévu aussi bien sur des lignes d'extrusion fonctionnant avec une seule extrudeuse qu'avec des lignes de production complexes dont la station d'extrusion comporte plusieurs extrudeuses disposées selon différents axes par rapport au bloc de raccordement. Toutes ces extrudeuses restent en permanence connectées au bloc de raccordement qui sera pourvu des conduits internes convenables.

L'appareil d'échange et la pince de verrouillage seront pourvus des capteurs nécessaires pour qu'une surveillance par ordinateur soit possible. Toutes les opérations peuvent dès lors être automatisées.

Bien entendu, il est également possible de construire l'appareil d'échange sans que son fonctionnement soit entièrement automatique. La possibilité d'assembler, d'ajuster et de préchauffer une tête d'extrusion dans une position de préparation de telle manière qu'elle puisse être mise en place par un mouvement simple commandé par moteur lors de l'échange, assure un avantage considérable dans certains cas, même si l'intervention d'opérateurs est nécessaire pour certaines opérations.

## Revendications

1. Ligne d'extrusion pour la production continue d'un élément métallique allongé pourvu d'une gaine en matière plastique, comportant un appareil d'échange (7) susceptible d'être équipé de deux têtes d'extrusion (12, 14) et de les déplacer alternativement entre une position de travail et une position de préparation, la tête d'extrusion qui se trouve en position de travail étant raccordée à un orifice de passage (5) de matière plastique, caractérisée en ce que l'appareil d'échange comporte, sur un socle (6) fixe par rapport audit orifice, des moyens indépendants (9, 10, 16, 17) supportant et déplaçant chacune desdites têtes selon un mouvement de translation circulaire, et des moyens mécanisés de fixation étanches (216,230) de la tête qui se trouve en position de travail par rapport à l'orifice.

2. Ligne d'extrusion selon la revendication 1, caractérisée en ce que l'appareil d'échange (7) comprend deux ensembles mobiles (8, 18) agencés pour recevoir chacun une des têtes (12, 14) et pour les déplacer automatiquement entre lesdites positions, l'un des ensembles se déplaçant dans un sens pendant que l'autre se déplace dans l'autre sens.

3. Ligne d'extrusion selon la revendication 2, caractérisée en ce que chaque ensemble mobile (8, 18) comporte un support de tête d'extrusion (11, 15), des moyens de guidage et de fixation (9, 10, 16, 17) pour positionner et fixer une tête d'extrusion par rapport au support (6) dans une position prédéterminée, et des moyens de raccordement électrique (121) solidaires du support (6) et avec lesquels des moyens de raccordement homologues (120) montés sur les têtes d'extrusion sont connectés lors de la mise en place d'une tête, sur un support.

4. Ligne d'extrusion selon la revendication 3, caractérisée en ce que les ensembles mobiles (8, 18) comportent chacun deux bras pivotants (9, 10, 16, 17) parallèles montés sur un socle commun (6), chaque support de tête d'extrusion (11, 15)étant relié par des articulations (110) aux extrémités libres de deux bras parallèles, le tout de manière à constituer un parallélogramme imprimant à la tête d'extrusion (12, 14) fixée sur le support de tête d'extrusion ledit déplacement en translation circulaire entre la position de travail et la position de préparation et vice versa.

5. Ligne d'extrusion selon la revendication 4, caractérisée en ce que le socle commun (6) de l'appareil d'échange porte deux vérins (93) actionnant chacun un bras de l'un desdits ensembles mobiles.

6. Ligne d'extrusion selon la revendication 1, caractérisée en ce que l'appareil d'échange comporte un bloc de raccordement fixe (5) pourvu d'au moins un conduit de raccordement entre une tête d'extrusion en position de travail (14) et une ou plusieurs extrudeuses (1, 2, 3), et des moyens de verrouillage (20, 22, 216, 230) permettant de fixer au bloc de raccordement la tête d'extrusion qui se trouve en position de travail, de manière que son ou ses ouvertures d'entrée soient connectées aux conduits de raccordement.

7. Ligne d'extrusion selon l'une quelconque des revendications précédentes, caractérisée en ce que l'appareil d'échange est équipé de moyens-moteur et de moyens de commande permettant d'effectuer de manière au moins partiellement automatique un déplacement d'une tête d'extrusion de sa position de travail à la position de préparation et d'une autre tête d'extrusion de la position de préparation à la position de travail.

8. Utilisation d'une ligne d'extrusion selon l'une quelconque des revendications 1 à 7, pour la fabrication de câbles électriques isolés comportant des segments successifs dont la structure de l'isolation diffère d'un segment à l'autre.

9. Utilisation d'une ligne d'extrusion selon l'une quelconque des revendications 1 à 7, pour la fabrication de fils électriques isolés pour applications automobiles comportant des segments successifs dont la gaine isolante présente des structures différentes.

## Claims

1. An extrusion line for the continuous production of an elongated metal element provided with a sheath of plastic material, comprising an exchanging apparatus (7) capable of being equipped with two extrusion heads (12, 14) and of moving each of them alternately between a working position and a preparation position, the extrusion head situated in working position being connected to an orifice (5) for the passage of plastic material, characterized in that the exchanging apparatus comprises, on a base (6) fixed with relation to said orifice, independent means (9, 10, 16, 17) supporting and displacing each of said heads according to a circular translatory movement, and mechanized means (216, 230) for fluid-tightly fixing the head which is in working position with relation to the orifice.

2. An extrusion line according to claim 1, characterized in that the exchanging apparatus (7) includes two movable assemblies (8, 18) arranged to receive one of the heads (12, 14) each and to move them automatically between said positions, one of the assemblies moving in one direction while the other moves in the other direction.

3. An extrusion line according to claim 2, characterized in that each movable assembly (8, 18) comprises an extrusion head support (11, 15), guiding and fixing means (9, 10, 16, 17) for positioning and fixing an extrusion head relative to the support (6) in a predetermined position, and electrical connection means (121) integral with the support (6) and to which corresponding connection means (120) mounted on the extrusion heads are connected at the time of the placing of a head on a support.

4. An extrusion line according to claim 3, characterized in that the movable assemblies (8, 18) each comprise two parallel pivoting arms (9, 10, 16, 17) mounted on a common base (6), each extrusion head support (11, 15) being connected by joints (110) to the free ends of two parallel arms, the whole so as to constitute a parallelogram communicating to the extrusion head (12, 14) fixed on the extrusion head support the said circular translatory displacement between the working position and the preparation position and vice versa.

5. An extrusion line according to claim 4, characterized in that the common base (6) of the exchanging apparatus bears two jacks (93), each actuating an arm of one of the said movable assemblies.

6. An extrusion line according to claim 1, characterized in that the exchanging apparatus comprises a fixed connection unit (5) provided with at least one connection duct between an extrusion head in working position (14) and one or more extruders (1, 2, 3), and locking means (20, 22, 216, 230) permitting the fixing to the connection unit of the extrusion head which is in working position so that its intake opening or openings are connected to the connection ducts.

7. An extrusion line according to any one of the preceding claims, characterized in that the exchanging apparatus is equipped with motor means and with control means permitting the carrying-out at least partially automatically of a displacement of one extrusion head from its working position to the preparation position and of another extrusion head from the preparation position to the working position.

8. Use of an extrusion line according to any one of the claims 1 to 7 for the manufacture of insulated electric cable comprising successive segments, the structure of the insulation of which differs from one segment to another.

9. Use of an extrusion line according to any one of the claims 1 to 7 for the manufacture of insulated electric wire for automobile applications comprising successive segments, the insulating sheath of which presents different structures.

## Patentansprüche

1. Extrusionssystem zur kontinuierlichen Herstellung eines länglichen kunststoffbeschichteten Elementes aus Metall, bestehend aus einem Wechselapparat (7), der in geeigneter Weise mit zwei Extrusionsköpfen (12, 14) ausrüstbar ist, welche abwechselnd zwischen einer Arbeitsposition und einer Vorbereitungsposition verschiebbar sind, wobei der Extrusionskopf, der sich in Arbeitsposition befindet, mit einer Durchgangsöffnung (5) des Kunststoffmaterials verbunden ist, dadurch gekennzeichnet, dass der Wechselapparat auf einem bezüglich der genannten Oeffnung festen Sockel (6) unabhängige Mittel (9, 10, 16, 17) umfasst, durch welche jeder der genannten Köpfe getragen und translativ und kreisförmig verschiebbar ist, und mechanische Mittel (216, 230) zur dichten Befestigung des Kopfes aufweist, der sich bezüglich der Oeffnung in Arbeitsposition befindet.

2. Extrusionssystem nach Anspruch 1, dadurch gekennzeichnet, dass der Wechselapparat (7) zwei bewegliche Einheiten (8, 18) aufweist, welche jede zur Aufnahme eines Kopfes (12, 14) ausgestattet ist und um diese automatisch zwischen den genannten Positionen zu verschieben, wobei sich die eine Einheit in der einen Richtung bewegt, während sich die andere in der anderen Richtung bewegt.

3. Extrusionssystem nach Anspruch 2, dadurch gekennzeichnet, dass jede bewegliche Einheit (8, 18) eine Extrusionskopfauflage (11, 15), Mittel zur Führung und Halterung (9, 10, 16, 17), um einen Extrusionskopf bezüglich des Sockels (6) in einer vorbestimmten Lage zu positionieren und festzuhalten, und Mittel zur Herstellung der elektrischen Verbindung (121) des Sockels (6) mit den entsprechenden Verbindungsmitteln (120), die auf den Extrusionsköpfen angeordnet sind, während des Aufsetzens eines Kopfes auf einer Auflage.

4. Extrusionssystem nach Anspruch 3, dadurch gekennzeichnet, dass jede der beweglichen Einheiten (8, 18) zwei drehbare Arme (9, 10, 16, 17) aufweist, welche parallel auf einem gemeinsamen Sockel (6) angeordnet sind, und jede Extrusionskopfauflage (11, 15) über ein Gelenk (110) mit den freien Enden der zwei parallelen Arme verbunden ist, um ein Parallelogramm zu bilden, mit welchem die genannte translative und kreisförmige Verschiebung des Extrusionskopfes (12, 14), der auf der Extrusionskopfauflage gehalten ist, zwischen der Arbeitsposition und der Vorbereitungsposition und umgekehrt erreichbar ist.

5. Extrusionssystem nach Anspruch 4, dadurch gekennzeichnet, dass der gemeinsame Sockel (6) des Wechselapparates zwei Stellglieder (93) trägt, welche jedes einen Arm der genannten beweglichen Einheit betätigt.

6. Extrusionssystem nach Anspruch 1, dadurch gekennzeichnet, dass der Wechselapparat einen festen Verbindungsblock aufweist, der mindestens mit einer Verbindungsleitung zwischen einem Extrusionskopf in Arbeitsposition (14) und einem oder mehrerer Extruder (1, 2, 3) und mit Verriegelungsmittel (20, 22, 216, 230) versehen ist, welche erlauben, auf dem Verbindungsblock den Extrusionskopf festzuhalten, der sich in Arbeitsposition befindet, derart dass seine Eintrittsöffnung oder -öffnungen an die Verbindungsleitungen angeschlossen sind.

7. Extrusionssystem nach einem der vorhergehenden Ansprüche, dadurch gekennzeichnet, dass der Wechselapparat mit Antriebsmitteln und Steuermitteln ausgestattet ist, welche mindestens eine teilweise automatische Verschiebung eines Extrusionskopfes von seiner Arbeitsposition in eine Vorbereitungsposition und eines anderen Extrusionskopfes von der Vorbereitungsposition in die Arbeitsposition zulässt.

8. Verwendung eines Extrusionsystems nach einem der Ansprüche 1 bis 7 für die Herstellung von isolierten elektrischen Kabeln, welche aufeinanderfolgende Abschnitte aufweisen, deren Isolationsstruktur von einem Abschnitt zum anderen unterschiedlich ist.

9. Verwendung eines Extrusionssystems nach einem der Ansprüche 1 bis 7 für die Herstellung von isolierten elektrischen Drähten zur Anwendung in Automobilen, welche aufeinanderfolgende Abschnitte aufweisen, deren Isolierhüllen unterschiedliche Strukturen aufweisen.
